# EUROPÄISCHE PATENTSCHRIFT

(11) **EP 0 994 245 B1**
(45) Veröffentlichungstag und Bekanntmachung des Hinweises auf die Patenterteilung: **08.06.2005**
(21) Anmeldenummer: 99120114.6
(22) Anmeldetag: 08.10.1999
(51) Int. Cl.: F02D 41/14, F01N 3/05, F02B 37/16, F01N 3/22

(54) **Verfahren und Vorrichtung zur Verminderung der abgasseitigen Bauteilbelastung von Brennkraftmaschinen**
Method and device for reducing the load of exhaust gas components of internal combustion engines
Procédé et appareil pour la réduction de la charge des composants de système d'échappement des moteurs à combustion interne

(30) Priorität: 15.10.1998 DE 19847477
(43) Veröffentlichungstag der Anmeldung: 19.04.2000
(73) Patentinhaber: AUDI AG, 85045 Ingolstadt (DE)
(72) Erfinder: Huber, Karl, Dr., 85072 Eichstätt (DE); Röhr, Mike, Dipl.-Ing., 85055 Ingolstadt (DE); Lachner, Dieter, Dr., 85080 Gaimersheim (DE)

(56) Entgegenhaltungen:
- WO-A-96/11331
- DE-A- 4 325 307
- DE-A- 19 643 027
- DE-C- 19 731 739
- GB-A- 962 628
- US-A- 4 534 173
- US-A- 5 406 788
- US-A- 5 724 810
- PATENT ABSTRACTS OF JAPAN vol. 1997, no. 12, 25. Dezember 1997 (1997-12-25) & JP 09 209746 A (TOYOTA MOTOR CORP), 12. August 1997 (1997-08-12)

## Beschreibung

Die Erfindung betrifft ein Verfahren sowie eine Vorrichtung zur Verminderung der abgasseitigen Bauteilbelastung von Brennkraftmaschinen, insbesondere in Kraftfahrzeugen, gemäß dem Oberbegriff des Patentanspruches 1.

Insbesondere bei aufgeladenen Brennkraftmaschinen hoher spezifischer Leistung sind die abgasseitigen Bauteile einschließend die Auslaßventile und die Auslasskanäle im Zylinderkopf, daran anschließend die Abgaskrümmer und gegebenenfalls stromab davon liegende Bauteile, auch zur Abgasentgiftung wie Katalysatoren, hohen Temperaturbelastungen ausgesetzt. Man ist deshalb bestrebt, durch Eingriffe in die Thermodynamik des Motors, durch den Einsatz hochtemperaturfester Werkstoffe und durch Kühlungsmaßnahmen (z.B. Wassereinspritzung) die Temperaturbelastungen zu vermindern.

Aus der Druckschrift DE 43 25 307 A1 ist ein Verfahren zur Steuerung der Kraftstoffzufuhr bei einer gemischverdichtenden mehrzylindrigen Brennkraftmaschine bekannt, bei der die Temperaturbelastung des Katalysators dadurch reduziert wird, dass die Kraftstoffzufuhr zu wenigstens einem Zylinder in Abhängigkeit von der Abgastemperatur unterbrochen wird. Der Nachteil dieses Verfahrens besteht darin, dass durch die Einzelzylinderabschaltung der Drehmomentverlauf der Brennkraftmaschine beeinflusst wird und dass die Brennkraftmaschine verstärkt Drehunförmigkeiten aufweist.

Aufgabe der Erfindung ist es, ein verbessertes Verfahren und eine Vorrichtung zur Durchführung des Verfahrens anzugeben, mit dem bei relativ geringem Mehraufwand eine zuverlässige Verminderung der Temperaturbelastung der abgasseitigen Bauteile der gattungsgemäßen Brennkraftmaschine erzielbar ist.

Die verfahrensgemäße Aufgabe wird mit den kennzeichnenden Merkmalen des Patentanspruches 1 gelöst. Die weiteren Patentansprüche beschreiben vorteilhafte Weiterbildungen des Verfahrens sowie eine geeignete Vorrichtung zur Durchführung des Verfahrens.

Erfindungsgemäß wird vorgeschlagen, dass die Kühlluft von einer an die Brennkraftmaschine angebauten Pumpe nahe den Brennräumen der Brennkraftmaschine in das Abgassystem eingeblasen wird und dass während der Einblasung von Kühlluft die Lambdaregelung abgeschaltet und auf eine Kraftstoff-Luft-Gemischsteuerung umgeschaltet wird.
Die Kühlluft, die entweder Umgebungstemperatur aufweist oder durch eine an der Brennkraftmaschine vorhandene Einrichtung (z.B. Ladeluftkühler, Klimaanlage) gekühlt sein kann, wird also von einer an die Brennkraftmaschine angebauten Pumpe gefördert, so dass es z.B. bei einer Kühlluftzuführung von 10 % des Verbrennungsluftdurchsatzes der Brennkraftmaschine gelingt die Abgastemperaturen um ca. 100° C abzusenken.
Die Abzweigung der Kühlluft kann ggf. aus der Ansaugleitung der Brennkraftmaschine vor der Messung der Verbrennungsluftmasse erfolgen, ansonsten ist die abgezweigte Kühlluftmenge steuer- oder regelungstechnisch zu berücksichtigen, um eine unbeabsichtigte Anreicherung des Kraftstoff-Luft-Gemisches der Brennkraftmaschine auszuschließen. So ist es bei einer Brennkraftmaschine mit Lambdaregelung bzw. mit einer Lambdasonde in der Abgasleitung vorteilhaft, wenn während der Einblasung von Kühlluft auf eine Kraftstoff-Luft-Gemischsteuerung umgeschaltet wird bzw. die Regelung über die Lambdasonde während der Zuführung von Kühlluft unterbrochen wird. Damit werden durch die zugeführte Kühlluft verfälschte Regelsignale der Lambdasonde unterbunden. Die Kraftstoff-Luft-Zumessung wird dann nur abhängig von den bekannten Motorparametern wie Verbrennungsluftdurchsatz, Drehzahl der Brennkraftmaschine, etc. auf einen Wert gesteuert, der um λ=1 oder höher liegt und der jedenfalls eine exotherme Nachreaktion beim Einblasen der Kühlluft ausschließt.

Die Pumpe kann eine an der Brennkraftmaschine vorhandene oder in verstärkter Ausführung eine angebaute Sekundärluftpumpe sein, über die in an sich bekannter Weise auch eine Sekundärluft-Zuführung bei noch kalter Brennkraftmaschine zur Abgasentgiftung durchgeführt werden kann.

Die Pumpe kann aber auch bei einer aufgeladenen Brennkraftmaschine von dem vorhandenen Verdichter oder bei einer nichtaufgeladenen Brennkraftmaschine von einem separaten Verdichter gefördert werden, wobei der Verdichter entweder unmittelbar mechanisch von der Brennkraftmaschine oder über eine Abgasturbine angetrieben sein kann.

Vorteilhaft wird die Kühlluft unmittelbar hinter den Auslassventilen der Brennkraftmaschine in die Auslasskanäle innerhalb des Zylinderkopfes eingeblasen, so dass die Abgastemperatur bereits unmittelbar hinter den Brennräumen vermindert wird.

Die Einblasung von Kühlluft läßt sich bei Brennkraftmaschinen mit ohnehin zur Abgasentgiftung vorgesehener Sekundärluftzuführung dadurch verwirklichen, daß die bereits vorhandenen Sekundärluftkanäle durch entsprechende Auslegung auf die gewünschte maximale Zuführung an Kühlluft mitverwendet werden, ggf. also lediglich einen erhöhten Luftdurchsatz ermöglichen. Bevorzugt erfolgt die Zuführung der Kühlluft dementsprechend - wie an sich für die Sekundärluftzuführung bekannt - über unmittelbar im Zylinderkopf der Brennkraftmaschine in dessen Auslasskanäle mündende Sekundärluftkanäle, die an die Kühlluftzuführung entsprechend angeschlossen werden. Ggf. kann dazu sogar ein einheitliches Sekundärluftventil verwendet werden, welches über ein entsprechendes Steuergerät einmal zur Sekundäriuftzuführung und im Vollast-Bereich der Brennkraftmaschine zur Kühlluftzuführung verwendet wird.

Ein Ausführungsbeispiel der Erfindung ist im folgenden mit weiteren Einzelheiten näher erläutert. Die schematische Zeichnung zeigt in
- Figur 1: eine nichtaufgeladene Vierzylinder-Hubkolben-Brennkraftmaschine mit einer Vorrichtung zur abgasseitigen Sekundärluft-Zuführung und einer Kühlluftzuführung mittels einer gemeinsamen Luftpumpe; und
- Figur 2: eine Hubkolben-Brennkraftmaschine mit Abgasturboaufladung und einer über ein Taktventil gesteuerten Kühlluftzuführung in die Auslasskanäle der Brennkraftmaschine.

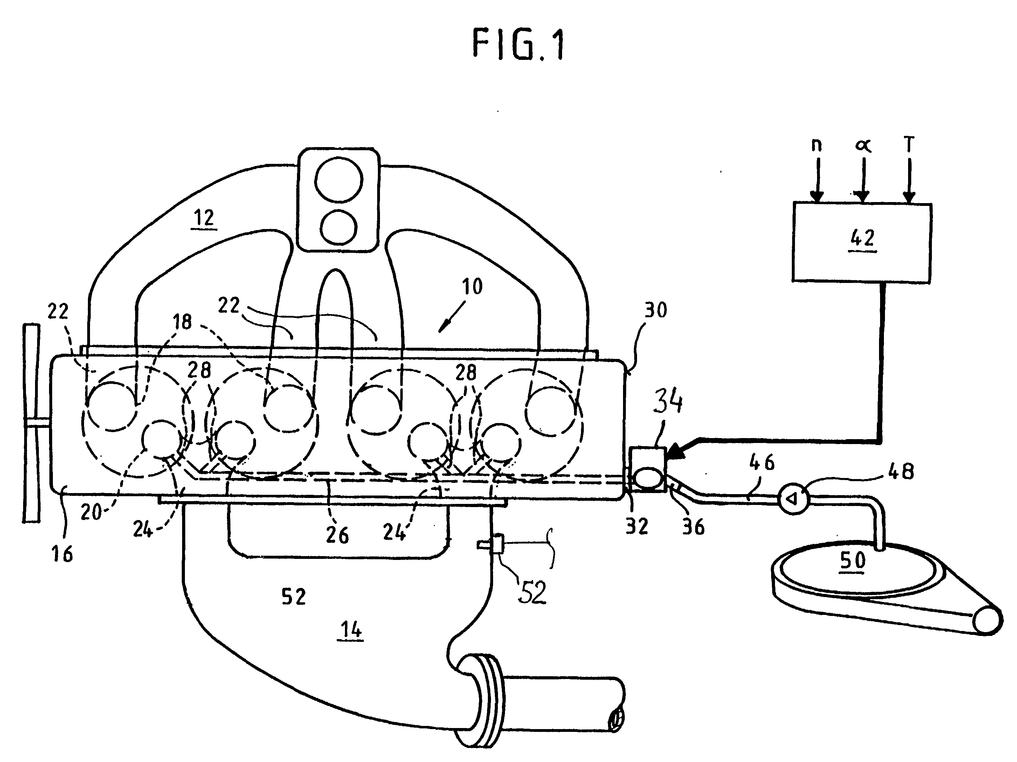

In der Figur 1 ist mit 10 eine Vierzylinder-Hubkolben-Brennkraftmaschine bezeichnet, an deren Zylinderkopf 16 für die Zuführung von Verbrennungsluft ein Ansaugkrümmer 12 und abgasseitig ein Abgaskrümmer 14 angeflanscht sind. Im Zylinderkopf 16 sind Einlaß- und Auslass-Gaswechselventile 18, 20 vorgesehen, die über entsprechende Einlaßkanäle 22 und Auslasskanäle 24 den Gaswechsel der Brennkraftmaschine steuern. Die Kraftstoffzumessung sowie die an den Abgaskrümmer 14 anschließende Abgasanlage mit Dreiwege-Katalysator sind herkömmlicher Bauart und deshalb nicht dargestellt.

Im Zylinderkopf 16 ist auf der Seite der Auslasskanäle 24 ein Längskanal 26 eingearbeitet, der einerseits über kurze Verbindungskanäle 28 in die Auslasskanäle 24 ausmündet und andererseits an der Stirnseite 30 des Zylinderkopfes 16 endet. Im Bereich der Mündungsstelle des Längskanals 26 ist an die Stirnseite 30 ein elektromagnetisch steuerbares Ventil 34 angeflanscht.

Das Ventil 34, das bevorzugt ein Durchfluss-Steuerventil bzw. Taktventil ist, ist über eine Leitung 46 mit einer Luftpumpe 48 verbunden, welche Luftpumpe 48 entweder elektrisch oder aber direkt mechanisch von der Brennkraftmaschine 10 angetrieben sein kann. Über die Luftpumpe 48 kann aus dem Luftfilter 50 der Brennkraftmaschine gereinigte Luft angesaugt und bei geöffnetem Ventil 34 über den Längskanal 26 und die Verbindungskanäle 28 in die Auslasskanäle 28 innerhalb des Zylinderkopfes 16 der Brennkraftmaschine gefördert werden.

Das Ventil 34 wird über ein Steuergerät 42 angesteuert, welches bspw. das Motorsteuergerät oder ein Steuergerät für die Kraftstoff-Luft-Zumessung der Brennkraftmaschine 10 sein kann. In dem Steuergerät 42 werden die von einem Abgas-Temperatursensor 52 am Abgaskrümmer 14 erfaßten Abgastemperaturen T, der Lastzustand α der Brennkraftmaschine 10, die Drehzahl n der Brennkraftmaschine 10 und ggf. weitere Maschinenparameter in logischer Verknüpfung verarbeitet.

Über das Steuergerät 42 kann einerseits in an sich bekannter Weise die Sekundärluftzuführung zur Brennkraftmaschine 10 gesteuert sein, d.h., dass bei einem Kaltstart der Brennkraftmaschine 10 und bei mit überstöchiometrischem Verhältnis betriebener Brennkraftmaschine (=λ < 1) Sekundärluft in das die Brennräume der Brennkraftmaschine verlassende Abgas zur Erzeugung einer exothermen Nachreaktion eingeblasen wird. Diese Sekundärluft wird in der Regel nur ein kurzes Zeitintervall beim Kaltstart der Brennkraftmaschine eingeblasen und führt zu einer schnellen Aufheizung der abgasführenden Bauteile.

Über das Steuergerät 42 wird darüber hinaus das Ventil 34 aber auch dann angesteuert, wenn über den Temperatursensor 52 eine zu hohe Abgastemperatur, z.B. 900° C, ermittelt werden und/oder wenn die Brennkraftmaschine oberhalb einer definierten Drehzahlschwelle n und/oder oberhalb einer definierten Lastschwelle α betrieben wird. Dann steuert das Steuergerät 42 das Ventil 34 auf eine Kühlluftmenge von bspw. 10 % des Verbrennungsluftdurchsatzes der Brennkraftmaschine 10 auf, wodurch gefördert über die Luftpumpe 48 die Kühlluft zur Absenkung der Abgastemperatur unmittelbar hinter den Auslassventilen 20 eingeblasen wird. Zugleich wird in nicht dargestellter Weise über das Steuergerät 42 sichergestellt, daß das der Brennkraftmaschine 10 zugeführte Kraftstoff-Luft-Gemisch auf einen λ-Wert begrenzt wird, bei dem keine exotherme Nachreaktion im Abgas mehr erfolgen kann. Dieser Wert ist in der Regel um λ=1 und größer (Betrieb im stöchiometrischen Gleichgewicht oder im Magerbetrieb).

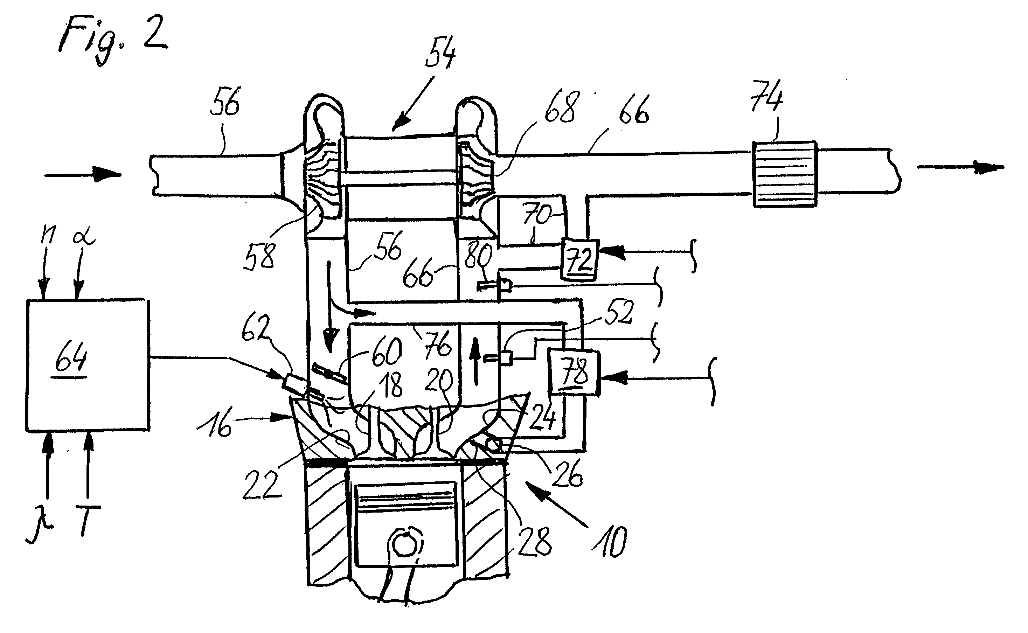

In der Figur 2 ist wiederum eine mehrzylindrige Hubkolben-Brennkraftmaschine 10 dargestellt, die über einen Abgasturbolader 54 aufgeladen betrieben wird. Funktionsgleiche Teile sind mit gleichen Bezugszeichen versehen.

Der Verdichter 58 des Abgasturboladers 54 ist in die Ansaugleitung 56 der Brennkraftmaschine 10 eingeschaltet. Zur Leistungssteuerung ist eine willkürlich steuerbare Drosselklappe 60 vorgesehen. Stromab der Drosselklappe 60 sind Einspritzventile 62 angeordnet, über die der von einem Steuergerät 64 zugemessene Kraftstoff in die Einlaßkanäle 22 des Zylinderkopfes 16 der Brennkraftmaschine 10 eingespritzt wird.

Die in der Abgasleitung 66 angeordnete Abgasturbine 68 treibt den Verdichter 58 an, wobei über eine Bypassleitung 70 und ein Bypassventil 72 die Antriebsleistung bzw. der stromab des Verdichters 56 anliegende Ladedruck steuerbar ist. Stromab der Abgasturbine 68 ist in die Abgasleitung 66 ein Katalysator 74 zur Abgasentgiftung eingesetzt.

Von der Ansaugleitung 56 zweigt stromab des Verdichters 58, jedoch stromauf der Drosselklappe 10, eine Kühlluftleitung 76 ab, in der ein Durchsatz-Steuerventil 78 angeordnet ist und die über den Längskanal 26 im Zylinderkopf 16 und die Verbindungskanäle 28 mit den Auslaßkanälen 24 verbunden ist. Durch Aufsteuem des Ventils 78 kann somit einerseits wie vorbeschrieben Sekundärluft zugeführt und andererseits Kühlluft in ausreichender Menge in die Auslasskanäle 24 eingeblasen werden. Es versteht sich, daß die Kanäle 26, 28 sowie die Kühlluftleitung 76 in ihrem Querschnitt entsprechend auszulegen sind.

Wenn die Brennkraftmaschine 10 mit Ladeluftkühlung versehen ist, so ist es vorteilhaft, wenn die Kühlluftleitung 76 stromab des Ladeluftkühlers abzweigt; es kann in der Kühlluftleitung 76 aber auch ein separater Wärmetauscher angeordnet sein, der ggf. an den Kältekreislauf einer Klimaanlage des Kraftfahrzeuges angeschlossen sein kann, die dementsprechend die Kühlluft auf einen adäquaten Wert absenkt.

In der Abgasleitung 66 sind ferner eine Lambdasonde 80 und ein Temperatursensor 52 angeordnet, welche Sensoren 80, 52 mit dem Steuergerät 64 verbunden sind. Mit der Lambdasonde 80 wird dabei in bekannter Weise der Sauerstoffgehalt im Abgas in einer Rückkopplungssteuerung mit dem Steuergerät 64 für die Kraftstoff-Luft-Gemischsteuerung eingeregelt, um bei λ-Werten um 1 eine adäquate Konvertierung des Abgases im Katalysator 74 sicherzustellen. Auch das Bypassventil 72 ist mit dem Steuergerät 64 verbunden, so daß in einer entsprechenden logischen Verknüpfungsschaltung des elektronischen Steuergerätes 64 sowohl ein ausreichender Ladedruck für die Zuführung von Kühlluft durch die Kühlluftleitung 76 ermöglicht ist.

Wird wiederum über den Temperatursensor 52 eine unzulässig hohe Abgastemperatur dem Steuergerät 64 signalisiert, so wird ggf. das Bypassventil 72 geschlossen um den Ladedruck in der Ansaugleitung 56 zu erhöhen. Ferner wird das Durchsatz-Steuerventil 78 aufgesteuert, so daß Kühlluft über die Kühlluftleitung 76 in die Auslasskanäle 24 einströmt. Zugleich wird die Auswertung der Signale durch die Lambdasonde 80 in dem Steuergerät 64 unterbrochen und die Kraftstoff-Luft-Verhältnissteuerung nunmehr ohne Lambdaregelung auf einen Wert um λ=1 oder größer gesteuert, so daß der Brennkraftmaschine 10 nunmehr nur noch Kraftstoff in einer Menge zugemessen wird, die im die Brennräume verlassenden Abgas keine unverbrannten Kraftstoffanteile mehr enthält, also keine exotherme Nachreaktion möglich ist. Dementsprechend wird das z.B. 900° C heiße Abgas aufgrund der Kühlluftzuführung auf z.B. 800° C abgesenkt.

Da die nicht dargestellte Kraftstoff-Luft-Zumesseinrichtung, z.B. mit einem Luftmassenmesser, in der Ansaugleitung 56 stromauf des Verdichters 58 angeordnet ist, muß hier die über die Kühlluftleitung 76 abgeführte Verbrennungsluftmenge von der Gesamtverbrennungsluftmenge im Steuergerät 64 rechnerisch subtrahiert werden, damit der Brennkraftmaschine 10 zu der tatsächlich zugeführten Verbrennungsluftmenge die exakte Kraftstoffmenge zur Erzielung des λ-Wertes = 1 zugemessen werden kann.

Es versteht sich, daß dabei die jeweilige Durchsatzmenge an Kühlluft bekannt sein muß, entweder durch empirische Ermittlung und ggf. mittels eines Kennfeldes, unter Berücksichtigung von Ladedruck, Last und Drehzahl der Brennkraftmaschine, etc. oder mittels eines zweiten Luftmassenmessers in der Kühlluftleitung 76.

Sobald ein unterer Temperaturschwellwert von z.B. 750° C erreicht wird und/oder wenn eine definierte Vollaststellung α der Brennkraftmaschine wieder verlassen wird, wird die Kühlluftzuführung durch Schließen des Durchsatz-Steuerventils 78 wieder eingestellt und durch Aktivierung der λ-Sondensignale wieder die Lambdaregelung aufgeschaltet.

Die Erfindung ist nicht auf die beschriebenen Ausführungsbeispiele beschränkt. Es können die Kühlluftzuführung einerseits und die Sekundärlufteinblasung andererseits auch als getrennte Systeme ausgeführt sein. Die Kühllufteinblasung kann auch außerhalb des Zylinderkopfes, z.B. in den Abgaskrümmer 14 hinein erfolgen. Die Steuerung der Kühlluftzuführung und der Kühlluftmenge kann auch bspw. anhand eines im elektronischen Steuergerätes 42 bzw. 64 abgelegten Kennfeldes nur in definierten Lastzuständen der Brennkraftmaschine erfolgen, in denen besonders heißes Abgas erwartet wird.

## Patentansprüche

1. Verfahren zur Verminderung der abgasseitigen Bauteilbelastung von Brennkraftmaschinen mit Lambdaregelung, insbesondere in Kraftfahrzeugen, mit an zumindest einen Zylinderkopf (16) der Brennkraftmaschine (10) anschließender Abgasanlage (14,24) und mit einer Kraftstoff und Verbrennungsluft zumessenden Einrichtung (42,64), wobei durch die Kraftstoff und Verbrennungsluft zumessende Einrichtung (42, 64) bei zu erwartenden hohen Abgastemperaturen ein Kraftstoff-Luft-Verhältnis (λ) nahe dem stöchiometrischenVerhältnis λ=1 oder magerer eingestellt wird,
**dadurch gekennzeichnet, dass**
die Kühlluft von einer an die Brennkraftmaschine angebauten Pumpe (48; 58) nahe den Brennräumen der Brennkraftmaschine (10) in das Abgassystem (24) eingeblasen wird, und während der Einblasung von Kühlluft die Lambdaregelung abgeschaltet und auf eine Kraftstoff-Luft-Gemischsteuerung umgeschaltet wird.

2. Verfahren nach Anspruch 1, **dadurch gekennzeichnet, daß** die Pumpe eine Sekundärluftpumpe (48) ist, über die auch eine Sekundärluftzuführung bei noch kalter Brennkraftmaschine (10) zur Abgasentgiftung durchgeführt wird.

3. Verfahren nach Anspruch 1 oder 2, **dadurch gekennzeichnet, dass** die Pumpe der Verdichter (58) eines Abgasturboladers (54) ist, von dem eine Kühlluftleitung (76) zur Abgasseite führt, die mittels eines Ventils (78) aufgesteuert wird.

4. Verfahren nach einem oder mehreren der Ansprüche 1 - 3, **dadurch gekennzeichnet, dass** die Kühllufteinblasung in den zumindest einen Zylinderkopf (16) jeweils in die Auslasskanäle (24) erfolgt.

5. Verfahren nach einem oder mehreren der vorhergehenden Ansprüche, **dadurch gekennzeichnet, daß** bei einer Brennkraftmaschine mit Sekundärlufteinblasung die Kühlluft über die Sekundärluftkanäle (26, 28) eingebracht wird.

6. Verfahren nach einem oder mehreren der Ansprüche 1 - 5, **dadurch gekennzeichnet, daß** ca. 5 - 20 %, insbesondere ca. 10 % des Vollast-Verbrennungsluftdurchsatzes der Brennkraftmaschine (10) an Kühlluft eingeblasen wird.

7. Verfahren nach einem oder mehreren der Ansprüche 1 - 6, **dadurch gekennzeichnet, daß** die Kühlluftzuführung abhängig von der Abgastemperatur (T) und/oder von einer abgasseitigen Bauteiltemperatur gesteuert wird.

8. Verfahren nach einem oder mehreren der Ansprüche 1 - 7, **dadurch gekennzeichnet, daß** die Kühlluftzuführung abhängig von der Last (α) und/oder der Drehzahl (n) der Brennkraftmaschine (10) gesteuert wird.

9. Brennkraftmaschine mit Lambdaregelung, die einen Zylinderkopf (16) und einen am daran anschließenden Abgaskrümmer (14) aufweist, wobei an dem Zylinderkopf (16) der Brennkraftmaschine (10) und/oder am daran anschließenden Abgaskrümmer (14) je Auslasskanal (24) Kühlluft-Zuführungskanäle (28) vorgesehen sind, an die eine über ein Ventil (34; 78) steuerbare Kühlluftleitung (46; 76) angeschlossen ist, die mit einer von der Brennkraftmaschine (10) mittel- oder unmittelbar angetriebenen Pumpe (48; 58) verbunden ist, **dadurch gekennzeichnet, dass** die Brennkraftmachine (10) ein Steuergerät (42,64) zur Durchführung, des Verfahrens nach einem oder mehreren der Ansprüche 1-8 aufweist.

10. Brennkraftmaschine nach Anspruch 9, **dadurch gekennzeichnet, daß** die Pumpe eine bevorzugt mechanisch von der Brennkraftmaschine (10) angetriebene Sekundärluftpumpe (48) ist.

11. Brennkraftmaschine nach Anspruch 10, **dadurch gekennzeichnet, daß** bei einer aufgeladenen Brennkraftmaschine (10) der Verdichter (58) über eine steuerbare Kühlluftleitung (76) mit den Kühlluftzuführungskanälen (26, 28) verbunden ist.

12. Brenntraftmaschine nach einem oder mehreren der Ansprüche 9-11, **dadurch gekennzeichnet, daß** das Ventill (78) ein Durchfluss-Steuerventil (78) ist, mit dem eine definierte Kühlluftmenge abhängig von der Last (α) und/oder der Drehzahl (n) der Brennkraftmaschine (10) und/oder abhängig von der Abgastemperatur (T) und/oder einer abgasseitigen Bauteiltemperatur steuerbar ist.

13. Brennkraftmaschine nach Anspruch 12, **dadurch gekennzeichnet, daß** das Durchfluss-Steuerventil (78) von einem die Kraftstoff-Luft-Zusammensetzung bestimmenden Steuergerät (64) gesteuert ist, das die von der Verbrennungsluft abgezweigte Kühlluftmenge bei der Kraftstoffzumessung berücksichtigt bzw. von der gesamt zugeführten Verbrennungsluft subtrahiert.

## Claims

1. Method of reducing the load of exhaust-gas components in internal combustion engines with lambda closed-loop control, in particular in motor vehicles, comprising an exhaust-gas system (14, 24) connected to at least one cylinder head (16) of the internal combustion engine (10) and a fuel and combustion-air metering device (42, 64), an air/fuel ratio (λ) close to the stoichiometric ratio λ = 1 or leaner being set by the fuel and combustion-air metering device (42, 64) when high exhaust-gas temperatures are anticipated, **characterised in that** the cooling air is injected into the exhaust-gas system (24) close to the combustion chambers of the internal combustion engine (10) by a pump (48; 58) mounted on the internal combustion engine and the lambda closed-loop control is shut off and switched to air/fuel mixture open-loop control during the injection of cooling air.

2. Method according to claim 1, **characterised in that** the pump is a secondary-air pump (48) also supplying secondary air for exhaust emission control when the internal combustion engine (10) is still cold.

3. Method according to claim 1 or claim 2, **characterised in that** the pump is the compressor (58) of an exhaust-gas turbocharger (54) from which a cooling-air line (76) controlled by means of a valve (78) leads to the exhaust-gas side.

4. Method according to one or more of claims 1 - 3, **characterised in that** the cooling air injected into the at least one cylinder head (16) is injected into the exhaust passages (24).

5. Method according to one or more of the preceding claims, **characterised in that**, in an internal combustion engine with secondary-air injection, the cooling air is introduced via the secondary-air passages (26, 28).

6. Method according to one or more of claims 1 - 5, **characterised in that** approximately 5 - 20 %, in particular approximately 10 % of the full-load combustion-air throughput of the internal combustion engine (10) is injected as cooling air.

7. Method according to one or more of claims 1 - 6, **characterised in that** the supply of cooling air is controlled as a function of the exhaust-gas temperature (T) and/or an exhaust-gas component temperature.

8. Method according to one or more of claims 1 - 7, **characterised in that** the supply of cooling air is controlled as a function of the load (α) and/or the speed (n) of the internal combustion engine (10).

9. Internal combustion engine with lambda closed-loop control, comprising a cylinder head (16) and an exhaust manifold (14) connected thereto, cooling-air supply passages (28) to which a cooling-air line (46; 76) controllable by means of a valve (34; 78) and connected to a pump (48; 58) driven directly or indirectly by the internal combustion engine (10) is connected being provided for each exhaust passage (24) on the cylinder head (16) of the internal combustion engine (10) and/or on the exhaust manifold (14) connected thereto, **characterised in that** the internal combustion engine (10) has a control unit (42, 64) for carrying out the method according to one or more of claims 1-8.

10. Internal combustion engine according to claim 9, **characterised in that** the pump is a secondary-air pump (48) driven preferably mechanically by the internal combustion engine (10).

11. Internal combustion engine according to claim 10, **characterised in that**, in a supercharged internal combustion engine (10), the compressor (58) is connected to the cooling-air supply passages (26, 28) by means of a controllable cooling-air line (76).

12. Internal combustion engine according to one or more of claims 9-11, **characterised in that** the valve (78) is a flow-control valve (78) by means of which a defined quantity of cooling air can be controlled as a function of the load (α) and/or the speed (n) of the internal combustion engine (10) and/or as a function of the exhaust-gas temperature (T) and/or an exhaust-gas component temperature.

13. Internal combustion engine according to claim 12, **characterised in that** the flow-control valve (78) is controlled by a control unit (64) determining the air/fuel composition, taking account of the quantity of cooling air taken from the combustion air during the fuel metering or subtracting it from the total quantity of combustion air supplied.

## Revendications

1. Procédé de réduction de la charge des composants de système de gaz d'échappement de moteurs à combustion interne, munis d'une régulation lambda, en particulier dans des véhicules automobiles, avec un système de gaz d'échappement (14, 24), se raccordant à au moins une culasse (16) du moteur à combustion interne (10), et avec un dispositif (42, 64) dosant le carburant et l'air de combustion, sachant que, au moyen du dispositif (42, 64) dosant le carburant et l'air de combustion, aux températures de gaz d'échappement élevées, escomptées, on règle le rapport air-carburant λ pour qu'il soit proche du rapport stoechiométrique λ=1, ou bien soit plus pauvre,
**caractérisé en ce que**
l'air de refroidissement est insufflé dans le système de gaz d'échappement (24), par une pompe (48 ; 58) montée sur le moteur à combustion interne, à proximité des chambres de combustion du moteur à combustion interne (10) et, pendant l'insufflation d'air de refroidissement, la régulation lambda est mise hors service et est commutée en une commande du mélange air-carburant.

2. Procédé selon la revendication 1, **caractérisé en ce que** la pompe est une pompe à air secondaire (48), par l'intermédiaire de laquelle est effectuée également une amenée d'air secondaire, dans un but de détoxification des gaz d'échappement, lorsque le moteur à combustion interne (10) est encore froid.

3. Procédé selon la revendication 1 ou 2, **caractérisé en ce que** la pompe est le compresseur (58) d'un turbocompresseur entraîné par les gaz d'échappement (54), d'où une conduite d'air de refroidissement (76) va au côté gaz d'échappement, en étant commandée au moyen d'une soupape (78).

4. Procédé selon l'une ou plusieurs des revendications 1 à 3, **caractérisé en ce que** l'insufflation d'air de refroidissement se fait dans la au moins une culasse (16), chaque fois dans les canaux d'échappement (24).

5. Procédé selon l'une ou plusieurs des revendications précédentes, **caractérisé en ce que**, dans le cas d'un moteur à combustion interne muni d'une insufflation d'air secondaire, l'air de refroidissement est introduit par des canaux d'air secondaires (26, 28).

6. Procédé selon l'une ou plusieurs des revendications 1 à 5, **caractérisé en ce qu'**environ 5 à 20 %, en particulier environ 10 % du débit d'air de combustion à pleine charge, du moteur à combustion interne (10), est insufflé à l'air de refroidissement.

7. Procédé selon l'une ou plusieurs des revendications 1 à 6, **caractérisé en ce que** l'amenée d'air de refroidissement est commandée en fonction de la température des gaz d'échappement (T) et/ou d'une température de composant située côté gaz d'échappement.

8. Procédé selon l'une ou plusieurs des revendications 1 à 7, **caractérisé en ce que** l'amenée d'air de refroidissement est commandée en fonction de la charge (α) et/ou de la vitesse de rotation (n) du moteur à combustion interne (10).

9. Moteur à combustion interne muni d'une régulation lambda, présentant une culasse (16) et un coude à gaz d'échappement (14) se raccordant à celle-ci, où, sur la culasse (16) du moteur à combustion interne (10) et/ou sur le coude de gaz d'échappement (16), s'y raccordant, de chaque canal d'échappement (24), sont chaque fois prévus des canaux d'amenée d'air de refroidissement (28), auxquels est raccordée la conduite de refroidissement (46 ; 76), susceptible d'être commandée par l'intermédiaire d'une soupape (34 ; 78) et reliée à une pompe (48 ; 58) entraînée indirectement ou directement par le moteur à combustion interne (10), **caractérisé en ce que** le moteur à combustion interne (10) présente un appareil de commande (42 ; 64) pour la mise en oeuvre du procédé selon l'une ou plusieurs des revendications 1 à 8.

10. Moteur à combustion interne selon la revendication 9, **caractérisé en ce que** la pompe est, de préférence, une pompe à air secondaire (48), entraînée mécaniquement par le moteur à combustion interne (10).

11. Moteur à combustion interne selon la revendication 10, **caractérisé en ce que**, dans le cas d'un moteur à combustion interne (10) suralimenté, le compresseur (58) est relié aux canaux d'amenée d'air de refroidissement (26 ; 28), par l'intermédiaire d'une conduite d'air de refroidissement (76) susceptible d'être commandée.

12. Moteur à combustion interne selon l'une ou plusieurs des revendications 9 à 11, **caractérisé en ce que** la soupape (78) est une soupape de commande à passage (78), à l'aide de laquelle on peut commander une quantité d'air de refroidissement définie, en fonction de la charge (α) et/ou de la vitesse de rotation (n) du moteur à combustion interne (10) et/ou en fonction de la température de gaz d'échappement (T) et/ou d'une température de composant, située côté gaz d'échappement.

13. Moteur à combustion interne selon la revendication 12, **caractérisé en ce que** la soupape de commande à passage (78) est commandée par un appareil de commande (64), déterminant la composition air-carburant et prenant en compte, lors de l'apport dosé de carburant, la quantité d'air de refroidissement prélevée de l'air de combustion, ou bien la soustrayant de l'air de combustion global amené.
